# FASCICULE DE BREVET EUROPEEN

(11) **EP 1 837 680 B1**
(45) Date de publication et mention de la délivrance du brevet: **21.11.2012**
(21) Numéro de dépôt: 06300275.2
(22) Date de dépôt: 23.03.2006
(51) Int. Cl.: G01S 13/93, G01S 5/00

(54) **Système de contrôle du déploiement d'engins spatiaux devant voler en formation, par détermination simultanée et de haute précision de leurs positions**
System zur Kontrolle der Verteilung von zuvor in einer Formation fliegenden Raumflugkörpern durch gleichzeitige und hoch präzise Bestimmung ihrer Positionen
Deployment control system for spacecraft having to fly in formation using simultaneous high precision determination of their positions

(43) Date de publication de la demande: 26.09.2007
(73) Titulaire: Thales, 92200 Neuilly-sur-Seine (FR)
(72) Inventeur: Frenkiel, Roland ALCATEL ALENIA SPACE CANNES, 06156 Cannes la Bocca Cedex (FR); Dargent, Thierry, 06810 Auribeau sur Siagne (FR)
(74) Mandataire: Esselin, Sophie

(56) Documents cités:
- CA-A1- 2 255 127
- FR-A- 2 689 855
- US-A- 4 375 697
- US-A- 5 979 830
- US-B1- 6 725 012
- THE CONSULTATIVE COMMITTEE FOR SPACE DATA SYSTEM: "Navigation Data Definitions and Conventions" GREEN BOOK, [Online] no. 500.0-G-2, 1 novembre 2005 (2005-11-01), - 1 novembre 2005 (2005-11-01) pages 6-1-6-7, XP002393268 Washington, USA Extrait de l'Internet: URL:http://public.ccsds.org/publications/a rchive/500x0g2.pdf> [extrait le 2006-08-03]
- DEININGER W D ET AL: "Formation flying activities and capabilities at ball aerospace" AEROSPACE CONFERENCE, 2003. PROCEEDINGS. 2003 IEEE MARCH 8-15, 2003, PISCATAWAY, NJ, USA,IEEE, vol. 6, 8 mars 2003 (2003-03-08), pages 62599-62614, XP010660555 ISBN: 0-7803-7651-X
- EUR SPACE AGENCY SPEC PUBL ESA SP; EUROPEAN SPACE AGENCY, (SPECIAL PUBLICATION) ESA SP; PROCEEDINGS OF THE 18TH INTERNATIONAL SYMPOSIUM ON SPACE FLIGHT DYNAMICS 2004, no. 548, 2004, pages 189-194, XP009070403
- VAILLON L ET AL: "Precision formation flying design for the SMART-2 and SMART-3 technology demonstration missions" INTERNATIONAL WORKSHOP ON SATELLITE CONSTELLATIONS AND FORMATION FLYING, 24 février 2003 (2003-02-24), pages 91-99, XP002320334

## Description

L'invention concerne les engins spatiaux, comme par exemple les satellites, destinés à se déplacer en formation pour assurer collectivement une mission, et plus précisément le contrôle du déploiement de tels engins dans l'espace en vue de constituer une formation présentant une configuration choisie.

Dans certaines missions de vol en formation, les distances séparant les engins spatiaux (par exemple des satellites (ou « flyers »)), après déploiement, doivent être faibles, voire très faibles (par exemple une dizaine de mètres).

Le déploiement est initialement prévu de manière à amener tous les engins spatiaux « à poste » dans des conditions dynamiques propices à un contrôle relatif autonome. Ce déploiement peut être initié par lancement d'un ou plusieurs composites, avec un ou plusieurs lanceurs distincts. On entend ici par « composite » un module transportant temporairement plusieurs engins spatiaux, comprenant des moyens de propulsion, et duquel les engins spatiaux se séparent dès que les moyens de propulsion ne sont plus utiles. Le déploiement peut également se faire par largage direct de tous les engins spatiaux sur une orbite de transfert.

Ces techniques d'initiation du déploiement induisent toutes au moins deux inconvénients communs : les distances inter-satellites peuvent être telles que la visibilité entre satellites n'est pas assurée, et le « rendez-vous » des engins spatiaux peut se faire avec des mouvements relatifs finaux qui peuvent entraîner des risques de collision. On entend ici par « rendez-vous » le moment où tous les engins spatiaux se retrouvent à l'intérieur d'une sphère, dite espace de rendez-vous, de diamètre égal à la portée maximale du système de métrologie de positionnement relatif, par exemple le lien radiofréquence (RF) inter-satellites (défini par leurs moyens de métrologie relative RF embarqués), soit typiquement 8 km pour cet exemple.

Aujourd'hui, aucune technique de déploiement de formation n'a été effectivement mise en oeuvre. Seule est bien connue et maîtrisée la technique de positionnement d'un engin spatial par rapport à un astre. Celle-ci consiste à mesurer, au moyen d'une station implantée au sol, les positions successives de l'engin spatial, et à déterminer, également au sol, les manoeuvres destinées à positionner l'engin par rapport à l'astre en fonction des mesures de position. Ces manoeuvres sont ensuite (télé-)transmises à l'engin spatial afin qu'il les effectue à l'aide de moyens de déplacement embarqués (tuyère(s) et/ou actionneur(s)).

Certes, il a été proposé quelques méthodes de déploiement, mais aucune d'entre elle ne prend en compte la possibilité de perdre un lien RF inter-satellites entre le lancement et la mise à poste (position finale au sein de la formation). Or, lors d'un lancement au moyen d'un unique lanceur, le respect de la sphère de portée RF (ou espace de rendez-vous) n'est pas forcément assuré. Par ailleurs, les engins spatiaux ne disposent pas forcément d'une capacité de manoeuvre suffisante pour compenser les différentiels de force qui s'exercent sur chacun d'entre eux.

De plus, pour un lancement au moyen de plusieurs lanceurs, la mise en communication des éléments de types différents (composites et engins spatiaux) n'est jamais prise en considération. Or, cette mise en communication nécessite obligatoirement le recours à un moyen extérieur, du fait que dans ce cas les distances inter-satellites sont largement supérieures à la portée RF. Ce moyen extérieur ne peut être que la station au sol qui est chargée d'effectuer les mesures de position, détermine les manoeuvres des engins spatiaux et transmet ces manoeuvres par voix d'ondes sous la forme de corrections de trajectoire de manière à les asservir sur leurs trajectoires nominales respectives tout en assurant leur rendez-vous avec une précision compatible avec la portée RF.

Le brevet américain US4375697 décrit une formation de satellites comportant un dispositif de contrôle qui permet de maintenir la position de chaque satellite dans la formation déjà constituée. Une différence avec l'objet de la présente demande est que ledit dispositif de contrôle est implanté sur un satellite de contrôle appartenant à la formation de satellites et qui constitue une référence.

Le brevet américain US5979830 décrit une méthode permettant de conserver une formation de satellites géostationnaires sur une position donnée en utilisant un lien optique intersatellite.

La publication «Navigation data definitions and conventions, CCSDS 500.0-G-2, Novembre 2005 » décrit un ensemble de techniques de mesures de vitesse, distance et direction angulaire pour la navigation aérospatiale.

L'invention a donc pour but d'améliorer la situation.

Elle propose à cet effet un système dédié au contrôle du déploiement d'au moins deux engins spatiaux, pourvus de moyens de manoeuvre et destinés à se déplacer selon une formation choisie, et comportant un dispositif de contrôle implanté au sol comprenant, d'une part, des premiers moyens de mesures chargés de déterminer sensiblement simultanément et avec une précision élevée les positions orbitales des engins spatiaux, et d'autre part, des premiers moyens de calcul chargés de déterminer pour chacun de ces engins spatiaux, en fonction de leurs positions orbitales, des manoeuvres destinées à positionner chacun d'entre eux sensiblement à un instant choisi dans une position choisie par rapport à une trajectoire de référence, compte tenu d'une loi horaire d'un engin de référence sur cette trajectoire de référence, afin de placer la formation dans une configuration choisie. Les premiers moyens de mesures comprennent au moins deux stations de mesures implantées au sol en des endroits choisis et chargées chacune de mesurer sensiblement simultanément au moins les distances qui les séparent des différents engins spatiaux, ainsi que des moyens de traitement chargés de déterminer les positions orbitales des engins spatiaux à partir au moins des mesures de distance sensiblement simultanées.

Le système de contrôle selon l'invention peut comporter d'autres caractéristiques qui peuvent être prises séparément ou en combinaison, et notamment :
- l'engin de référence est soit l'un des engins spatiaux de la formation (dans ce cas les autres engins spatiaux sont appelés engins suiveurs), soit un engin fictif représentatif de l'ensemble de la formation (par exemple placé au barycentre de celle-ci) ;
- ses premiers moyens de calcul peuvent être chargés de déterminer des manoeuvres destinées à positionner sensiblement chaque engin à un instant choisi en une position choisie par rapport à la trajectoire de référence et avec une vitesse relative choisie (par exemple sensiblement nulle) par rapport à l'engin de référence, compte tenu de la loi horaire de ce dernier sur sa trajectoire de référence ;
- il peut comprendre, d'une part, des seconds moyens de métrologie relative, par exemple de type radiofréquence (RF), implantés sur chacun des engins et chargés d'effectuer au moins des mesures de position de leur propre engin relativement à certains au moins des autres engins spatiaux, lorsque ces derniers sont placés dans un espace dit de rendez-vous, et d'autre part, des seconds moyens de calcul implantés sur chacun des engins et chargés d'estimer les risques de collision avec certains au moins des autres engins spatiaux à partir au moins des mesures de position relative, et, en cas de risque de collision dépassant une valeur choisie, de déterminer les manoeuvres d'évitement locales et passagères à entreprendre ;
   ➢ les seconds moyens de métrologie relative peuvent être chargés d'effectuer au moins des mesures, ainsi qu'éventuellement des estimations, de vitesse relative de leur engin spatial par rapport à certains au moins des autres engins spatiaux. Dans ce cas, les seconds moyens de calcul sont chargés d'estimer les risques de collision avec certains au moins des autres engins spatiaux à partir au moins des mesures de position relative et/ou des mesures ou estimations de vitesse relative ;
   ➢ les seconds moyens de métrologie relative et les seconds moyens de calcul peuvent être mis en fonctionnement au plus tard lors de la séparation de leurs engins respectifs par rapport à un lanceur ;
- ses premiers moyens de mesures peuvent être chargés de déterminer les positions orbitales des engins spatiaux au moyen de la technique dite « Delta DOR » (pour « Delta Differential One way Range »).

L'invention propose également un dispositif de contrôle destiné à faire partie d'un système de contrôle de déploiement du type de celui présenté ci-avant.

L'invention propose également un engin spatial (comme par exemple un satellite), destiné à se déplacer en formation au sein d'un groupe d'engins spatiaux du même type, et comprenant des moyens de manoeuvre, et des seconds moyens de métrologie relative et des seconds moyens de calcul d'un système de contrôle de déploiement du type de celui présenté ci-avant.

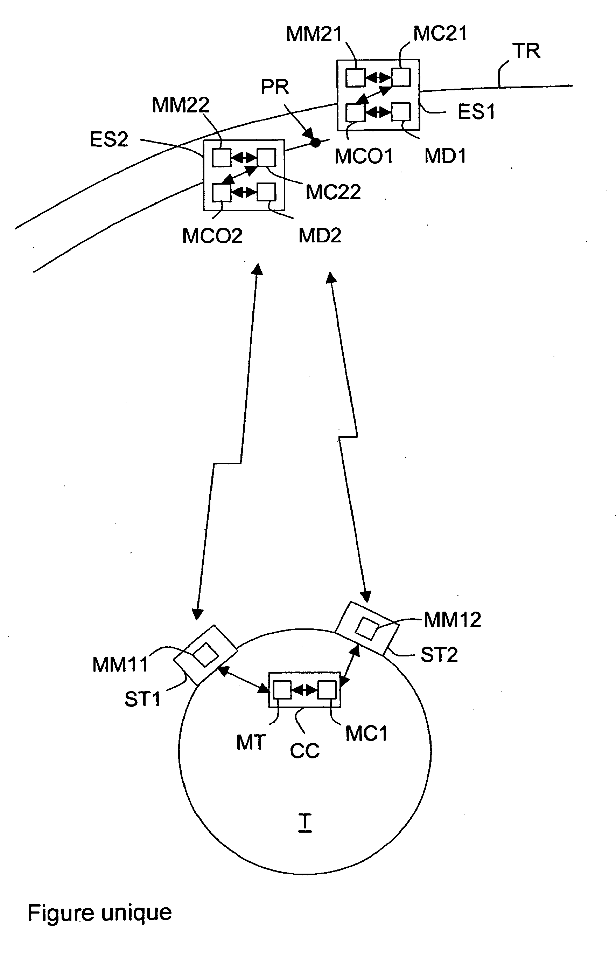

D'autres caractéristiques et avantages de l'invention apparaîtront à l'examen de la description détaillée ci-après, et du dessin annexé, sur lequel l'unique figure illustre de façon très schématique un exemple de déploiement de deux engins spatiaux au moyen d'un système de contrôle selon l'invention. Le dessin annexé pourra non seulement servir à compléter l'invention, mais aussi contribuer à sa définition, le cas échéant.

L'invention a pour objet de permettre le contrôle du déploiement d'engins spatiaux dans l'espace en vue de constituer une formation présentant une configuration choisie.

Dans ce qui suit, on considère, à titre d'exemple illustratif et non limitatif, que les engins spatiaux sont des satellites d'observation (éventuellement de type « flyer ») volant (ou destinés à voler) en formation afin de remplir une mission d'observation spatiale ou terrestre.

Mais, l'invention n'est pas limitée à ce type d'engin spatial. Elle concerne en effet tous les engins spatiaux destinés à voler en formation selon une configuration choisie (éventuellement modifiable).

L'invention intervient une fois que les engins (spatiaux) ont été séparés de leur(s) lanceur(s), ainsi qu'éventuellement d'un ou plusieurs composite(s) (ou module(s) de transport à moyens de propulsion autonomes).

L'invention propose un système destiné à contrôler le déploiement d'au moins deux engins spatiaux ESi pourvus de moyens de manoeuvre MDi et destinés à se déplacer selon une formation choisie. On entend ici par « déploiement » la phase permettant de positionner des engins spatiaux ESi les uns par rapport aux autres de manière à constituer une formation présentant une configuration (ou géométrie) choisie, de façon durable (bien que modifiable).

Dans l'exemple illustré sur l'unique figure, on n'a représenté que deux engins spatiaux ES1 et ES2 (i = 1 et 2), destinés à voler en formation. Mais, l'invention n'est pas limitée à ce nombre. Elle concerne en effet n'importe quel nombre d'engins spatiaux dès lors que ce nombre est supérieur ou égal à deux (2).

Un système de contrôle de déploiement selon l'invention comprend au moins un dispositif de contrôle implanté au sol et comprenant des premiers moyens de mesures MM1j et MT et un premier module de calcul MC1.

Dans ce qui suit on considère, à titre d'exemple illustratif et non limitatif, que le dispositif de contrôle est implanté au sol. Mais cela n'est pas obligatoire. On peut en effet envisager que la localisation se fasse par rapport à une constellation de satellites en vol (par exemple). Le dispositif de contrôle est alors implanté dans des satellites de la constellation qui possèdent des horloges synchronisées.

Les premiers moyens de mesures MM1j et MT sont chargés de déterminer sensiblement simultanément et avec une précision élevée les positions orbitales des engins spatiaux ESi qui sont en phase de déploiement (notamment lors de la sous-phase dite de croisière (ou « cruising ») qui doit les amener à l'intérieur d'un espace de rendez-vous). On entend ici par « espace de rendez-vous » une sphère de diamètre sensiblement égal à la portée radiofréquence (RF) entre deux engins spatiaux. Cette portée est actuellement d'environ 8 km.

On entend ici par précision élevée une précision typiquement de l'ordre de (ou inférieure à) quelques dizaines, voire quelques centaines, de mètres pour une distance d'environ un million de kilomètres.

Pour atteindre ce type de précision, on peut par exemple utiliser la technique dite Delta DOR (pour « Delta Differential One way Range »), développée par l'ESOC et le JPL et par exemple décrite dans un article accessible à l'adresse Internet http://www.issfd.dlr.de/papers/P0118.pdf).

Une telle technique permet d'obtenir une précision d'environ 25 m pour une distance d'environ 1,5 millions de kilomètres (ce qui correspond au point de Lagrange 2 (ou L2) par rapport à la Terre). La mise en oeuvre de cette technique nécessite au moins deux stations de mesures implantées au sol STj (ici j = 1 et 2), par exemple sur la Terre, et un module de traitement MT couplé aux stations STj.

Toute autre technique de détermination de position orbitale, reposant sur l'observation d'engins par des moyens de mesures distants, orientés différemment et synchrones, connue de l'homme de l'art, peut être utilisée.

Chaque station (de mesures) STj comprend un premier module de mesures MM1j capable d'émettre des signaux (par exemple radiofréquences (RF) - la RF sert à la fois à la métrologie et de liens de communication) à destination des engins spatiaux ESi, de collecter les signaux réfléchis et d'en déduire sensiblement simultanément les distances (mesures dites de « range », en anglais) qui le séparent des différents engins spatiaux ESi, ainsi que de préférence les vitesses radiales (par exemple par mesures doppler) des engins spatiaux ESi. La simultanéité des mesures effectuées par les stations STj sur les engins spatiaux ESi permet de s'affranchir des erreurs sur la mesure absolue commune à tous les engins.

Le module de traitement MT est chargé de déterminer les positions orbitales des différents engins spatiaux ESi à partir des mesures de distance, et des éventuelles mesures de vitesse radiale, simultanées (à la précision des horloges synchronisées des stations sol STj) effectuées par les premiers modules de mesures MM1j des stations STj. Les positions orbitales sont par exemple déterminées au moyen d'un filtrage récursif dans le temps de l'ensemble des mesures de positions/vitesses, de type filtrage de Kalman, basé sur un modèle de prédiction des trajectoires des engins spatiaux ESi fourni par la mécanique orbitale et le modèle des mesures effectuées par les stations sol STj.

Comme cela est illustré sur l'unique figure, le module de traitement MT peut par exemple être implanté dans un centre de calcul CC séparé physiquement des stations STj. Mais, en variante, il peut être implanté dans l'une des stations STj.

Le premier module de calcul MC1, du système de contrôle, est chargé de déterminer les manoeuvres (ou plans de manoeuvre) de chaque engin spatial ESi en fonction des positions orbitales déterminées simultanément par les premiers moyens de mesures MM1j et MT. Plus précisément, le premier module de calcul MC1 détermine pour chaque engin spatial ESi les manoeuvres destinées à le positionner à un instant choisi sensiblement en une position choisie (ou point de rendez-vous) PR par rapport à une trajectoire de référence TR, compte tenu de la loi horaire d'un engin de référence sur cette trajectoire de référence TR.

On entend ici par « loi horaire » la loi qui régit le déplacement de l'engin de référence sur sa trajectoire de référence TR, et donc qui permet de connaître à chaque instant sa position théorique (ainsi qu'éventuellement sa vitesse vectorielle) par rapport à cette trajectoire de référence TR.

Par ailleurs, on entend ici par « manoeuvres » une ou des commandes (télé-)transmises depuis le sol vers un engin spatial ESi et destinées à corriger sa trajectoire en cours afin qu'il se dirige vers le rendez-vous.

Comme cela est illustré sur la figure, l'engin de référence est par exemple l'un (ES1) des engins spatiaux de la formation. Dans ce cas, les autres engins spatiaux ES2 sont appelés engins suiveurs. Le premier module de calcul MC1 détermine alors tout d'abord les manoeuvres destinées à positionner l'engin de référence ES1, sensiblement sur une trajectoire de référence TR choisie. Puis, il détermine pour chaque engin suiveur ES2, les manoeuvres destinées à le positionner à un instant choisi sensiblement en une position choisie (ou point de rendez-vous) PR par rapport à la trajectoire de référence TR, compte tenu de la loi horaire de l'engin de référence ES1 sur sa trajectoire de référence TR.

Mais, dans une variante, l'engin de référence peut être un engin fictif qui représente l'ensemble de la formation. Par exemple cet engin fictif est placé au barycentre de la formation et sa trajectoire est la trajectoire de référence TR. Dans ce cas, tous les engins spatiaux ESi de la formation sont des engins suiveurs. Le premier module de calcul MC1 détermine alors tout d'abord la trajectoire de référence TR de l'engin fictif (de référence). Puis, il détermine pour chaque engin spatial ES1, ES2, les manoeuvres destinées à le positionner à un instant choisi sensiblement en une position choisie (ou point de rendez-vous) PR par rapport à la trajectoire de référence TR, compte tenu de la loi horaire de l'engin fictif (de référence) sur sa trajectoire de référence TR.

On considère dans ce qui suit, à titre d'exemple illustratif et non limitatif, que l'engin de référence est l'engin spatial ES1 de la formation.

Il est important de noter qu'à chaque engin suiveur ES2 correspond une position choisie PR qui constitue sensiblement sa position finale par rapport à l'engin de référence ES1, et donc au sein de la formation choisie (aux éventuelles corrections locales et finales près sur lesquelles on reviendra plus loin). L'objectif est donc de déterminer pour chaque engin suiveur ES2 un point de rendez-vous spécifique PR par rapport à l'engin suiveur ES1, compte tenu de sa trajectoire de référence TR, puis les manoeuvres qui vont lui permettre de se rendre en ce point de rendez-vous PR. Un point de rendez-vous PR est un point d'un espace à cinq dimensions définies par exemple par les cinq premiers paramètres orbitaux (le sixième, par exemple la position sur orbite, étant libre).

Grâce aux « plans de manoeuvre » ainsi définis par le premier module de calcul MC1 pour chacun desdits engins spatiaux ESi on est en mesure de constituer la formation selon une configuration choisie.

Le premier module de calcul MC1 peut par exemple être implanté dans le centre de calcul CC, comme illustré sur l'unique figure. Mais, en variante, il peut être implanté dans l'une des stations STj.

Les plans de manoeuvre sont par exemple retransmis aux différents engins spatiaux ESi par le centre de calcul CC (lorsqu'il contient le premier module de calcul MC1 et dispose de moyens d'émission adaptés) ou bien par l'une des stations au sol STj.

On notera que plusieurs plans de manoeuvre successifs peuvent être éventuellement nécessaires pour qu'un engin suiveur ES2 puisse parvenir au niveau de son point de rendez-vous spécifique PR. Par conséquent, les premiers moyens de mesure MM1j peuvent être configurés pour effectuer des mesures de distances, ainsi que préférentiellement de vitesses radiales, soit périodiquement, soit sur ordre, par exemple du premier module de calcul MC1.

De préférence, les manoeuvres (ou plan de manoeuvre) que le module de calcul MC1 détermine pour un engin suiveur ES2 sont destinées à le positionner à un instant choisi non seulement sensiblement au niveau d'une position choisie (ou point de rendez-vous) PR par rapport à la trajectoire de référence TR, mais également avec une vitesse relative choisie par rapport à l'engin de référence ES1. Cette vitesse relative est par exemple choisie sensiblement égale à zéro (0), afin de figer la formation dans la configuration choisie.

Cela se fait en prenant en compte la loi horaire extrapolée, éventuellement corrigée, de l'engin de référence ES1, c'est-à-dire l'estimation totale des positions et vitesses. Le filtre de kalman estime tout en même temps, grâce à une accumulation de mesures de distances ainsi que de préférence de vitesses radiales sur un horizon de temps donné. La prédiction donne également la loi horaire future, avec un biais qui diverge avec le temps depuis la dernière mesure.

Classiquement, lorsqu'un engin spatial ESi reçoit du sol des instructions définissant les manoeuvres qui ont été déterminées pour lui, il les communique à un module de correction d'orbite MCOi qu'il comprend. Ce dernier, partie intégrante du logiciel de contrôle bord semi-autonome, plus connu sous l'acronyme anglais GNC (pour « Guidance Navigation and Control »), est chargé de convertir à chaque pas de temps du GNC les instructions de manoeuvre reçues du sol en force et/ou couple, puis de convertir ces force et/ou couple en commande(s) qu'il transmet aux moyens de manoeuvre MDi de son engin spatial ESi sous une forme compréhensible.

Les moyens de manoeuvre MDi peuvent être de tout type. Il peut notamment s'agir de tuyère(s) et/ou d'actionneur(s), par exemple chimique(s), notamment pour les manoeuvres impulsionnelles, ou plasmique(s), à gaz froid, à émission de champ électrique ou électromagnétique, notamment pour les manoeuvres à poussée continue.

On notera qu'en variante les positions relatives peuvent être déterminées à partir des différentiels des mesures de chacune des stations sol STj plutôt que par l'estimation des positions absolues de chacun des engins spatiaux ESi. La covariance de cette grandeur différentielle étant forte, cela permet d'améliorer la précision d'estimation, une fois entrée dans les données constantes du filtre de Kalman. Le modèle de prédiction utilisé peut alors être celui des perturbations différentielles entre deux engins spatiaux ESi donnés, en supposant que l'on a préalablement fait la mesure de position absolue de l'un des engins spatiaux ESi, par exemple celui de référence.

Le système de contrôle contient de préférence, en complément de son dispositif de contrôle implanté au sol (MM1j, MT, MC1), des seconds moyens de métrologie relative MM2i et des seconds modules de calcul MC2i implantés au moins dans chacun des engins suiveurs ES2 (ainsi qu'éventuellement dans l'engin de référence ES1).

Les seconds moyens de métrologie relative MM2i sont chargés d'effectuer au moins des ensembles de mesures instantanées de position relative de l'engin spatial ESi dans lequel ils sont implantés par rapport à certains au moins des autres engins spatiaux ESi' lorsqu'ils se trouvent à l'intérieur de l'espace de rendez-vous, c'est-à-dire à portée radio lorsque les mesures sont de type radiofréquence (RF).

Les seconds moyens de métrologie relative MM2i peuvent être d'un autre type que radiofréquence.

Ils peuvent également et éventuellement effectuer des mesures de vitesses relatives qui complètent les ensembles de mesures instantanées de positions relatives et permettent de déterminer plus finement certaines au moins des positions relatives des autres engins spatiaux ESi' par rapport à leur engin spatial ESi.

Chaque second module de calcul MC2i est chargé d'estimer les risques de collision de son engin spatial ESi avec chaque autre engin spatial ESi' (i≠i'), objet de mesures, à partir au moins des mesures de position relative et des éventuelles mesures de vitesse relative effectuées par les seconds moyens de métrologie relative MM2i associés. Par exemple, le second module de calcul MC2i délivre, pour chaque engin spatial ESi' objet de mesures, une valeur représentative de la probabilité qu'il entre en collision avec son engin spatial ESi. Le second module de calcul MC2i peut alors comparer chaque valeur de probabilité à une valeur seuil, et lorsqu'une valeur de probabilité est supérieure à la valeur seuil (c'est-à-dire en cas de risque de collision) il détermine des manoeuvres d'évitement locales et passagères destinées à permettre à son engin spatial ESi d'éviter au moins un autre engin spatial ESi'.

Afin d'améliorer la précision des estimations de risque de collision, les seconds moyens de métrologie relative MM2i peuvent être également chargés d'effectuer des estimations (prédiction) des positions relatives et éventuellement des vitesses vectorielles relatives de leur engin spatial ESi par rapport à chaque autre engin spatial ESi' objet d'une mesure de distance et de direction relative. Pour ce faire, ils peuvent par exemple comprendre un filtre de Kalman chargé de donner les positions et vitesses relatives depuis le début de la campagne de mesures jusqu'au dernier instant de mesure, c'est-à-dire la loi horaire, permettant alors d'extrapoler leurs valeurs dans le futur, à condition de connaître l'effet des actionneurs et des perturbations différentielles. On notera que le biais de l'estimation dans le futur (extrapolation) croît avec le temps. A priori on n'utilise pas de filtre de Kalman en mode sauvegarde, mais cela peut être envisagé.

Le second module de calcul MC2i est chargé d'estimer les risques de collision de son engin spatial ESi avec chaque autre engin spatial ESi' objet de mesures, à partir des mesures et/ou estimations de position relative et éventuellement des mesures et/ou estimations de vitesse relative.

Les seconds moyens de métrologie relative MM2i et le second module de calcul MC2i, qui sont implantés au moins dans chaque engin suiveur ES2, constituent ce que l'homme de l'art appelle généralement un dispositif d'anticollision (ou d'évitement). Tout type de dispositif d'anticollision (ou d'évitement) connu de l'homme de l'art peut être utilisé dans un engin spatial ESi.

Les manoeuvres d'évitement décidées par un second module de calcul MC2i sont de préférence prioritaires par rapport aux manoeuvres (ou plan de manoeuvre) déterminées au sol pour son engin spatial ESi. Par conséquent, chaque fois qu'un second module de calcul MC2i décide que des manoeuvres d'évitement doivent être effectuées par son engin spatial ESi, il les communique au module de correction d'orbite MCOi (par exemple de type GNC) associé. Ce dernier les convertit en commande(s) de correction de trajectoire, puis il les transmet aux moyens de manoeuvre MDi de son engin spatial ESi afin qu'ils les exécutent.

De préférence, les seconds moyens de métrologie relative MM2i et le second module de calcul MC2i, qui sont implantés au moins dans chaque engin suiveur ES2, sont agencés de manière à pouvoir être mis en fonctionnement (ou activés) au plus tard lorsque leur engin spatial se sépare du lanceur ou de l'éventuel composite qui les transporte momentanément. Ainsi, chaque engin spatial ESi peut faire l'objet d'une détection de collision dès le début de la phase de déploiement.

Lorsqu'un engin suiveur ES2 est parvenu au niveau de son point de rendez-vous spécifique PR, il peut arriver que l'engin de référence ES1 ait légèrement varié de sa trajectoire de référence TR et/ou qu'il n'ait pas exactement suivi sa loi horaire et/ou que sa vitesse relative par rapport à l'engin suiveur ES2 ne soit pas celle choisie au sol. Dans ce cas, le point de rendez-vous spécifique PR et/ou la vitesse relative de l'engin suiveur ES2 doit (doivent) être corrigé(s). Les mesures effectuées au sol n'étant pas suffisamment précises, les seconds moyens de métrologie relative MM2i et le second module de calcul MC2i, qui sont implantés dans l'engin spatial ESi, peuvent alors être chargés de positionner précisément ce dernier compte tenu de la position réelle de l'engin de référence ES1. Ils sont en effet capables de déterminer la position relative (et la vitesse relative) de leur engin suiveur ES2 par rapport à l'engin de référence ES1, puis de la (les) comparer à la position relative prévue (et/ou la vitesse relative prévue), et de déterminer les manoeuvres correctrices que doit effectuer leur engin suiveur ES2 pour qu'il soit correctement et précisément positionné par rapport à l'engin de référence ES1, avec la vitesse relative prévue. Cette correction finale peut se faire de façon complètement autonome à bord, mais elle est déclenchée soit à la demande du sol, soit automatiquement une fois que l'engin suiveur ES2 est parvenu au niveau du point de rendez-vous PR initialement déterminé par le sol.

Les premier MC1 et seconds MC2i modules de calcul, les modules de correction d'orbite MCOi et le module de traitement MT, peuvent être réalisés sous la forme de circuits électroniques, de modules logiciels (ou informatiques), ou d'une combinaison de circuits et de logiciels.

On notera que l'invention permet de réintégrer dans une formation un engin spatial (suiveur) qui s'est éloigné de l'engin de référence d'une distance supérieure à la portée radio (typiquement 8 km).

Par ailleurs, on notera qu'en choisissant de définir chaque point de rendez-vous par rapport à l'orbite finale de l'engin de référence, on s'affranchit des problèmes de contrôle pendant la sous-phase de croisière (ou transfert), hormis l'éventuelle (et préférentielle) mise en oeuvre d'une fonction d'anti-collision. Cela permet de simplifier le travail du module de correction d'orbite (GNC) pendant cette sous-phase et donc d'optimiser la consommation puisqu'elle est réduite aux besoins liés à la navigation et au guidage.

L'invention ne se limite pas aux modes de réalisation de système de contrôle, de dispositif de contrôle et d'engin spatial décrits ci-avant, seulement à titre d'exemple, mais elle englobe toutes les variantes que pourra envisager l'homme de l'art dans le cadre des revendications ci-après.

Dans ce qui précède on a décrit une mise en oeuvre de l'invention dans laquelle les premiers moyens de mesures et les premiers moyens de calcul du dispositif de contrôle sont implantés au sol (dans des stations sol). Mais, les premiers moyens de mesures et/ou les premiers moyens de calcul du dispositif de contrôle peuvent être implantés dans des satellites d'une constellation en vol qui possèdent des horloges synchronisées. Par exemple, les premiers moyens de mesures du dispositif de contrôle peuvent être implantés dans les satellites d'une constellation en vol, tandis que les premiers moyens de calcul du dispositif de contrôle sont implantés dans une station au sol. La localisation des engins spatiaux, qui doivent être placés selon une configuration choisie, se fait alors par rapport à la constellation de satellites en vol.

## Revendications

1. Système de contrôle de déploiement initial d'au moins deux engins spatiaux (ESi) pourvus de moyens de manoeuvre (MDi) et destinés à se déplacer selon une formation choisie, le système de contrôle comportant un dispositif de contrôle, **caractérisé en ce que** le dispositif de contrôle est implanté au sol et comprend i) des premiers moyens de mesures (MM1j) comportant au moins deux stations de mesures (SMj) implantées au sol en des endroits choisis et agencées chacune pour mesurer sensiblement simultanément au moins les distances qui les séparent desdits engins spatiaux, ii) des moyens de traitement (MT) couplés aux deux stations de mesures (SMj) et agencés pour déterminer les positions orbitales desdits engins spatiaux (ESi) à partir au moins desdites mesures de distance sensiblement simultanées, et iii) des premiers moyens de calcul (MC1) agencés pour déterminer pour chacun desdits engins spatiaux (ESi), en fonction desdites positions orbitales, des manoeuvres destinées à positionner chacun d'entre eux à un instant choisi sensiblement en une position choisie par rapport à une trajectoire de référence (TR), compte tenu d'une loi horaire d'un engin de référence (ES1) sur ladite trajectoire de référence (TR), de manière à placer ladite formation dans une configuration choisie.

2. Système selon la revendication 1, **caractérisé en ce que** ledit engin de référence est l'un desdits engins spatiaux (ESi) de ladite formation, lesdits autres engins spatiaux de la formation étant alors appelés engins suiveurs.

3. Système selon la revendication 1, **caractérisé en ce que** ledit engin de référence est un engin fictif représentatif de l'ensemble de ladite formation.

4. Système selon l'une des revendications 1 à 3, **caractérisé en ce que** lesdits premiers moyens de calcul (MC1) sont agencés pour déterminer des manoeuvres destinées à positionner sensiblement chaque engin (ES2) à un instant choisi en une position choisie par rapport à ladite trajectoire de référence (TR) et avec une vitesse relative choisie par rapport audit engin de référence (ES1), compte tenu de ladite loi horaire dudit engin de référence (ES1) sur sa trajectoire de référence (TR).

5. Système selon la revendication 4, **caractérisé en ce que** lesdits premiers moyens de calcul (MC1) sont agencés pour déterminer des manoeuvres destinées à positionner sensiblement chaque engin (ES2) avec une vitesse relative sensiblement nulle par rapport audit engin de référence (ES1).

6. Système selon l'une des revendications 1 à 5, **caractérisé en ce qu'**il comprend i) des seconds moyens de métrologie relative (MM2i) implantés sur chacun desdits engins (ES2) et agencés pour effectuer au moins des mesures de positions relatives entre leur engin (ESi) et certains au moins desdits autres engins spatiaux (ESi') lorsque ces derniers sont placés dans un espace dit de rendez-vous, et pour déduire au moins desdites mesures certaines au moins des positions relatives de leur engin spatial (ESi) par rapport auxdits autres engins spatiaux (ESi'), et ii) des seconds moyens de calcul (MC2i) implantés sur chacun desdits engins (ES2) et agencés pour estimer des risques de collision avec certains au moins des autres engins spatiaux à partir au moins desdites mesures de position relative, et, en cas de risque de collision dépassant une valeur choisie, pour déterminer des manoeuvres d'évitement locales et passagères.

7. Système selon la revendication 6, **caractérisé en ce que** lesdits seconds moyens de métrologie relative (MM2i) sont agencés pour effectuer des estimations de vitesse relative de leur engin spatial (ESi) par rapport à certains au moins des autres engins spatiaux (ESi'), et **en ce que** lesdits seconds moyens de calcul (MC2i) sont agencés pour estimer lesdits risques de collision avec certains au moins des autres engins spatiaux (ESi') à partir au moins desdites mesures de position relative et/ou desdites mesures de vitesse relative.

8. Système selon l'une des revendications 6 et 7, **caractérisé en ce que** lesdits seconds moyens de métrologie relative (MM2i) et lesdits seconds moyens de calcul (MC2i) sont propres à être mis en fonctionnement au plus tard lors de la séparation de leurs engins spatiaux respectifs (ESi) par rapport à un lanceur.

9. Système selon l'une des revendications 1 à 8, **caractérisé en ce que** lesdits premiers moyens de mesures (MM1i) sont agencés pour déterminer lesdites positions orbitales des engins spatiaux (ESi) au moyen d'une technique dite « Delta DOR ».

10. Système selon l'une des revendications 1 à 9, **caractérisé en ce que** ledit dispositif de contrôle (MM1j, MT, MC1) est implanté au sol.

11. Dispositif de contrôle (MM1j, MT, MC1), **caractérisé en ce qu'**il est propre à faire partie d'un système de contrôle de déploiement selon l'une des revendications précédentes.

12. Engin spatial (ESi), comprenant des moyens de manoeuvre (MDi) et destiné à se déplacer en formation au sein d'un groupe d'engins spatiaux du même type, **caractérisé en ce qu'**il comprend des seconds moyens de métrologie relative (MM2i) et des seconds moyens de calcul (MC2i) d'un système de contrôle de déploiement selon l'une des revendications 1 à 10.

13. Engin spatial selon la revendication 12, **caractérisé en ce qu'**il est agencé sous la forme d'un satellite.

## Claims

1. A system for controlling the initial deployment of at least two spacecraft (ESi) provided with manoeuvring means (MDi) and designed to move according to a selected formation, said control system comprising a control device, **characterised in that** said control device is installed on the ground and comprises i) first measuring means (MMlj) comprising at least two measuring stations (SMj) installed on the ground at selected locations and each arranged so as to substantially simultaneously measure at least the distances that separate them from said spacecraft, ii) processing means (MT) coupled to said measuring stations (SMj) and arranged so as to determine the orbital positions of said space craft (ESi) on the basis of at least said substantially simultaneous distance measurements, and iii) first calculation means (MC1) arranged so as to determine for each of said space craft (ESi), as a function of said orbital positions, manoeuvres designed to position each of them at a selected instant substantially in a selected position relative to a reference trajectory (TR), taking into account a schedule of a reference craft (ES1) on said reference trajectory (TR), so as to place said formation in a selected configuration.

2. The system according to claim 1, **characterised in that** said reference craft is one of said spacecraft (ESi) of said formation, said other spacecraft of the formation thus being referred to as follower craft.

3. The system according to claim 1, **characterised in that** said reference craft is a dummy craft representing the whole of said formation.

4. The system according to any one of claims 1 to 3, **characterised in that** said first calculation means (MC1) are arranged so as to determine manoeuvres designed to substantially position each craft (ES2) at a selected instant in a selected position relative to said reference trajectory (TR) and with a selected relative speed relative to said reference craft (ES1), taking into account said schedule of said reference craft (ES1) on its reference trajectory (TR).

5. The system according to claim 4, **characterised in that** said first calculation means (MC1) are arranged so as to determine the manoeuvres that are designed to substantially position each craft (ES2) with a relative speed that is substantially zero relative to said reference craft (ES1).

6. The system according to any one of claims 1 to 5, **characterised in that** it comprises i) second relative metrology means (MM2i) installed on each of said craft (ES2) and arranged so as to carry out at least relative position measurements between their craft (ESi) and at least some of said other spacecraft (ESi') when said craft are placed in a space referred to as rendezvous, and for at least determining from said measurements at least some of the relative positions of their spacecraft (ESi) relative to said other spacecraft (ESi'), and ii) second calculation means (MC2i) installed on each of said craft (ES2) and arranged so as to estimate risks of collision with at least some of the other spacecraft on the basis of at least said relative position measurements, and, in the case of a risk of collision exceeding a selected value, for determining local and transitory avoidance manoeuvres.

7. The system according to claim 6, **characterised in that** said second relative metrology means (MM2i) are arranged so as to carry out estimates of the relative speed of their spacecraft (ESi) relative to at least some of the other spacecraft (ESi'), and **in that** said second calculation means (MC2i) are arranged so as to estimate said risks of collision with at least some of the other spacecraft (ESi') on the basis of at least said relative position measurements and/or said relative speed measurements.

8. The system according to any one of claims 6 and 7, **characterised in that** the operation of said second relative metrology means (MM2i) and said second calculation means (MC2i) can be started during the separation of their respective spacecraft (ESi) from a launcher at the latest.

9. The system according to any one of claims 1 to 8, **characterised in that** said first measuring means (MM1i) are arranged so as to determine said orbital positions of the spacecraft (ESi) by means of a technique referred to as "Delta DOR".

10. The system according to any one of claims 1 to 9, **characterised in that** said control device (MM1j, MT, MC1) is installed on the ground.

11. A control device (MM1j, MT, MC1), **characterised in that** it is designed to be part of a deployment control system according to any one of the preceding claims.

12. A spacecraft (ESi), comprising manoeuvring means (MDi) and designed to move in formation within a group of spacecraft of the same type, **characterised in that** it comprises second relative metrology means (MM2i) and second calculation means (MC2i) of a deployment control system according to any one of claims 1 to 10.

13. The spacecraft according to claim 12, **characterised in that** it is arranged in the form of a satellite.

## Patentansprüche

1. System zum Steuern der anfänglichen Verteilung von wenigstens zwei Raumflugkörpern (ESi), die mit Manövriermitteln (MDi) ausgestattet und für eine Bewegung in einer gewählten Formation ausgelegt sind, wobei das Steuersystem eine Steuervorrichtung umfasst, **dadurch gekennzeichnet, dass** die Steuervorrichtung am Boden installiert ist und Folgendes umfasst: i) erste Messmittel (MM1j), die wenigstens zwei Messstationen (SMj) umfassen, die am Boden an gewählten Orten installiert und jeweils so ausgelegt sind, dass sie im Wesentlichen gleichzeitig wenigstens die Abstände messen, die sie von dem Raumflugkörper trennen, ii) Verarbeitungsmittel (MT), die mit den Messstationen (SMj) gekoppelt sind und die Aufgabe haben, die Orbitalposition der Raumflugkörper (ESi) anhand von wenigstens den im Wesentlichen gleichzeitigen Abstandsmessungen zu ermitteln, und iii) erste Berechnungsmittel (MC1) mit der Aufgabe, für jeden der Raumflugkörper (ESi) in Abhängigkeit von den Orbitalpositionen Manöver zum Positionieren aller dieser Raumflugkörper zu einem gewählten Zeitpunkt im Wesentlichen in einer gewählten Position relativ zu einer Referenzflugbahn (TR) unter Berücksichtigung eines Zeitplans eines Referenzflugkörpers (ES1) auf der Referenzflugbahn (TR) zu positionieren, um die Formation in eine gewählte Konfiguration zu bringen.

2. System nach Anspruch 1, **dadurch gekennzeichnet, dass** der Referenzflugkörper einer der Raumflugkörper (ESi) der Formation ist, wobei die anderen Raumflugkörper der Formation dann als Folgeflugkörper bezeichnet werden.

3. System nach Anspruch 1, **dadurch gekennzeichnet, dass** der Referenzflugkörper ein Dummy-Flugkörper ist, der für die gesamte Formation repräsentativ ist.

4. System nach einem der Ansprüche 1 bis 3, **dadurch gekennzeichnet, dass** die ersten Rechenmittel (MC1) die Aufgabe haben, Manöver zu ermitteln, um im Wesentlichen jeden Flugkörper (ES2) zu einem gewählten Zeitpunkt in einer gewählten Position relativ zur Referenzflugbahn (TR) und mit einer gewählten relativen Geschwindigkeit relativ zum Referenzflugkörper (ES1) unter Berücksichtigung des Zeitplans des Referenzflugkörpers (ES1) auf seiner Referenzflugbahn (TR) zu positionieren.

5. System nach Anspruch 4, **dadurch gekennzeichnet, dass** die ersten Rechenmittel (MC1) die Aufgabe haben, Manöver zum Positionieren von im Wesentlichen jedem Flugkörper (ES2) mit einer relativen Geschwindigkeit von im Wesentlichen null relativ zum Referenzflugkörper (ES1) zu ermitteln.

6. System nach einem der Ansprüche 1 bis 5, **dadurch gekennzeichnet, dass** es Folgendes umfasst: i) zweite relative Metrologiemittel (MM2i), die auf den einzelnen Flugkörpern (ES2) installiert und so ausgelegt sind, dass sie wenigstens relative Positionsmessungen zwischen ihrem Flugkörper (ESi) und wenigstens bestimmten der anderen Raumflugkörper (ESi') durchführen, wenn sich diese in einem als Rendezvous bezeichneten Raum befinden, und wenigstens von den bestimmten Messungen wenigstens die relativen Positionen ihres Raumflugkörpers (ESi) relativ zu den anderen Raumflugkörpern (ESi') ermitteln, und ii) zweite Rechenmittel (MC2i), die auf den einzelnen Flugkörpern (ES2) installiert und so ausgelegt sind, dass sie die Risiken einer Kollision mit wenigstens bestimmten der anderen Raumflugkörper auf der Basis von wenigstens den relativen Positionsmessungen schätzen und, falls ein Kollisionsrisiko einen gewählten Wert übersteigt, ein lokales und vorübergehendes Ausweichmanöver ermitteln.

7. System nach Anspruch 6, **dadurch gekennzeichnet, dass** die zweiten relativen Metrologiemittel (MM2i) so ausgelegt sind, dass sie Schätzungen der relativen Geschwindigkeit ihres Raumflugkörpers (ESi) relativ zu wenigstens bestimmten der anderen Raumflugkörper (ESi') durchführen, und dadurch, dass die zweiten Rechenmittel (MC2i) die Aufgabe haben, die Risiken einer Kollision mit wenigstens bestimmten der anderen Raumflugkörper (ESi') anhand von wenigstens den relativen Positionsmessungen und/oder den relativen Geschwindigkeitsmessungen zu schätzen.

8. System nach Anspruch 6 und 7, **dadurch gekennzeichnet, dass** der Betrieb der zweiten relativen Metrologiemittel (MM2i) und der zweiten Rechenmittel (MC2i) spätestens beim Abkoppeln ihres jeweiligen Raumflugkörpers (ESi) von einem Startgerät gestartet werden kann.

9. System nach einem der Ansprüche 1 bis 8, **dadurch gekennzeichnet, dass** die ersten Messmittel (MM1i) so ausgelegt sind, dass sie die Orbitalpositionen der Raumflugkörper (ESi) mit einer als "Delta DOR" bezeichneten Technik ermitteln.

10. System nach einem der Ansprüche 1 bis 9, **dadurch gekennzeichnet, dass** die Steuervorrichtung (MM1j, MT, MC1) am Boden installiert ist.

11. Steuervorrichtung (MM1j MT, MC1), **dadurch gekennzeichnet, dass** sie als Teil eines Verteilungssteuersystems nach einem der vorherigen Ansprüche ausgelegt ist.

12. Raumflugkörper (ESi), der Manövriermittel (MDi) umfasst und die Aufgabe hat, sich in Formation innerhalb einer Gruppe von Raumflugkörpern desselben Typs zu bewegen, **dadurch gekennzeichnet, dass** er zweite relative Metrologiemittel (MM2i) und zweite Rechenmittel (MC2i) eines Verteilungssteuersystems nach einem der Ansprüche 1 bis 10 umfasst.

13. Raumflugkörper nach Anspruch 12, **dadurch gekennzeichnet, dass** er in Form eines Satelliten ausgelegt ist.
